# EUROPEAN PATENT APPLICATION

(11) **EP 4 412 184 A1**
(43) Date of publication of application: **07.08.2024**
(21) Application number: 23155137.5
(22) Date of filing: 06.02.2023
(51) Int. Cl.: H04L 67/141, H04L 47/70, H04L 67/00, H04W 12/06, H04W 12/084

(54) **METHOD FOR CREATING A TRUSTED COMMUNICATION CHANNEL BETWEEN AN INTERNAL USER EQUIPMENT WITHIN A NETWORK AND AN EXTERNAL TRUST ADAPTER OF AN EXTERNAL USER EQUIPMENT OUTSIDE THE NETWORK, AND NETWORK**

(71) Applicant: Siemens Aktiengesellschaft, 80333 München (DE)
(72) Inventor: Besslich, Robert, 84419 Schwindegg (DE); Richerzhagen, Björn, 85055 Ingolstadt (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The invention is related to a method for creating a trusted communication channel (2) between an internal user equipment (7) within a network (1) and an external trust adapter (6) of an external user equipment (8) outside the network (1). comprising the steps of: Receiving a connection request (10) for establishing the trusted communication channel (2) between the internal user equipment (7) and the external trust adapter (6) of an external user equipment (8) by a trust control entity (9) of the network (1); Establishing an internal trusted communication channel (3) between the internal trust adapter (5) and the internal user equipment (7) according to the network configuration request (15); establishing an external trusted communication channel (4) between the internal trust adapter (5) and the external trust adapter (6); Connecting the external trusted communication channel (4) to the internal trusted communication channel (3) to establish the trusted communication channel (2).

## Description

The invention is concerned with a method for creating a trusted communication channel between an internal user equipment within a network and an external trust adapter of an external user equipment outside the network, and a network.

Zero Trust (ZT) concept from Information Technology (IT) is being applied to Operation Technology (OT) environments. In Operation Technology, not all devices can or should run the required ZT-adapter components. Therefore, gateway concepts are being utilized, where one device within a "red cell" is equipped with a ZT-adapter to establish and maintain a connection to the outside world. The existing concept enables connectivity on device basis, and the corresponding ZT-adapters providing end points are hosted on each end device. In typical Operation Technology environments large numbers of devices are placed in protected network segments, leading to a very large number of required ZT-adapters on a potentially wide variety of device types with different operating systems, processor architectures and compute power.

Traditional OT systems use perimeter-based security. This is where the communications network is separated into different network perimeters that are connected by firewalls. Each network perimeter has a defined role, and the connected firewalls are configured accordingly. All devices within a perimeter have in general similar communication policies and/or rights.

Such a traditional setup is usually not supporting the ZT-approach and major adoptions are required.

In general, the ZT concept introduces trusted communication channels (e.g., channels) between service endpoints (e.g., applications on a device), which results in placement of at least one ZT-adapter providing end points of the trusted communication channels on each device. This ensures that only services on trusted devices are enabled to authenticate at the ZT-infrastructure for establishing the communication service.

When combining the perimeter-based security approach with the ZT-concept, often ZT proxies are created. Thus, the communication channel starts at the ZT-proxy and enables communication to another end point which is typically in another network perimeter. This concept reduces the number of required ZT-agents, but it does not control communication between services and/or devices inside a network perimeter.

It is an object of the present invention, to apply the zero-trust concept also to wirelessly connected OT devices, utilizing the potential of 5G campus networks.

This objective is achieved by the respective subject matter of the independent claims. Further implementations and preferred embodiments are subject matter of the dependent claims.

A first aspect of the invention is related to a method for creating a trusted communication channel between an internal user equipment within the network and an external trust adapter of an external user equipment outside the network. The trusted communication channel may be designed as a zero trusted channel providing a connection between trust adapters. Trust adapters are also called trust clients or trust endpoints.

The network may be configured as a 5G network complying with a 5G standard or with another wireless communication standard. The trusted communication channel may comprise an external trusted communication channel, providing a connection between the internal trust adapter and the external trust adapter, wherein an access to services and/or devices via the trusted communication channel may be restricted according to predefined rights. The internal user equipment may be configured as a device and/or as a service inside the network. The external trust adapter may be configured to provide an endpoint of the trusted communication channel to an external user equipment outside the network.

A first step of the method comprises a reception of a connection request for establishing the trusted communication channel between the internal user equipment and the external trust adapter of the external user equipment by a trust control entity of the network. The connection request may comprise the involved user equipment and requested services.

The trust control entity of the network may be configured as a computer device or as a module of a computer device and/or the network, configured to manage a building and/or a use of trusted communication channels. The trust control entity is configured to initiate a creation of the trusted communication channel between the internal user equipment and the external trust adapter according to the connection request.

The connection request may be sent to the trust control entity of the network in a message from the external user equipment, the internal user equipment or another entity. The connection request may request an establishment of the trusted communication channel between the external trust adapter and the internal user equipment to provide defined services. The external user equipment may operate an application that is being accessed by the internal user equipment. The internal user equipment may be a computing entity that is equipped with a wired or wireless communication module to communicate with the network.

In a next step the trust control entity of the network provides the connection request to an AAA-entity of the network. The AAA-entity is an Authentication, Authorization and Accounting entity used to manage access rights for devices and services in the network. The AAA-entity receives the connection request. The AAA-entity checks the admissibility of the connection request. In other words the trust control sends the connection request or at least some details of the connection request to the AAA-entity to prove whether the connection request complies with the access rights for devices and services in the network. The access rights for the devices and services in the network may be stored in the AAA-entity. The AAA-entity is able to check whether the requested service and/or the requested devices are allowed to communicate through the trusted communication channel as requested.

Upon approval of the connection request, the AAA-entity sends a connection release signal to the trust control entity to signal the admissibility of the connection request. In other words, the AAA-entity sends a connection release signal to the trust control entity to signal the eligibility of the connection request after the connection request has been approved by the AAA-entity. The connection release signal confirms that the connection request meets the access rights and is therefore valid.

Upon receiving the release signal, the trust control entity sends an adapter configuration to an internal trust adapter on the network. The internal trust adapter is intended to be an endpoint for an external trusted channel that has to connect the external trust adapter to the internal trust adapter. The internal trust adapter may serve as an entry point of the external trusted communication channel of the trusted communication channel that connects the external trust adapter to the network. The adapter configuration may include information and settings based on the connection request that may be required to establish the trusted communication channel. In particular, the adapter configuration may relate to aspects of the internal trusted communication channel.

In a next step the internal trust adapter sends a network configuration request for establishing an internal trusted communication channel between the internal trust adapter and the internal user equipment of the network to a 5G-Core of the network. The network configuration request may be generated by the internal trust adapter based on the adapter configuration. The network configuration request may include information and settings necessary for the 5G-Core to establish a connection between the internal trust adapter and the internal user equipment. The network configuration request may comprise a desired user equipment-configuration to configure the internal user equipment and a UPF-configuration to establish and configure connection functions in a UPF of the network. The 5G-Core may be configured to establish the internal trusted communication channel in the network by configuring the user plane function of the network and the internal user equipment according to the network configuration request.

In a next step the 5G-Core provides the network configuration request to the AAA-entity of the network in order to check the admissibility of the network configuration request. In other words, before configuring the UPF and the internal user equipment, the 5G-Core sends the network configuration request to the AAA unit to prove that the network configuration request complies with the access rights.

In a next step the AAA-entity receives the network configuration request and checks an admissibility of the network configuration request. The check may comprise the desired UE-configuration and the UPF-configuration.

Upon approval of the network configuration request, the AAA-entity sends a network configuration release signal to the 5G-Core. The network configuration release signal confirms that the network configuration request meets the access rights and is therefore valid.

Upon reception of the network configuration release signal, the 5G-Core establishes the internal trusted communication channel between the internal trust adapter and the internal user equipment according to the network configuration request.

Upon establishment of the internal trusted communication channel, the internal trust adapter sends a readiness signal to the trusted control entity. In other words the trust control entity is informed by the internal trust adapter that the internal trusted communication channel inside the network is established.

Upon reception of the readiness signal by the trust control entity, the trusted control entity sends an initiation message to the external trust adapter and an initiation message to the internal trust adapter. The initiation messages may comprise setting for the trust adapters to establish the external trusted communication channel between the external trust adapter and the internal trust adapter.

Upon establishment of the external trusted communication channel, the internal trust adapter connects the external trusted communication channel to the internal trusted communication channel to establish the trusted communication channel.

By the connection of the external trusted communication channel and the internal trusted communication channel the trusted communication channel providing the trusted connection between the external entity and the internal entity as requested by the connection request is provided.

The external trust adapter may receive data of the external user device and may channel the data through the communication channel. The external trust adapter may also receive data from the internal user equipment through the trusted communication channel and provide the data to the external user equipment.

The invention has the advantage that a trusted communication channel may be provided between the external user equipment and the internal user equipment through the internal trust adapter of the network. Therefore, it is not necessary to provide a trust adapter for each user equipment of the network.

The invention also comprises embodiments that provide features which afford additional technical advantages.

According to a further embodiment of the invention, the method comprises a step of sending a firewall configuration to a firewall of the network by the trust control entity. The firewall configuration may define required port settings for firewall ports needed to set up the external configuration channel through the network firewall. The embodiment also comprises a further step of providing a connection through the firewall for the external trusted communication channel by the firewall according to the firewall configuration. In other words, the firewall may open ports according to the firewall configuration to allow the establishment of the external trusted communication channel between the internal trust adapter and the external trust adapter through the firewall.

According to a further embodiment of the invention, the method comprises a step of establishing the external trusted communication channel through the trust control entity by the trust control entity. In other words, the trust control entity configures the internal trust adapter and the external trust adapter to guide the external trusted communication channel through the control entity. The embodiment has the advantage that traffic that passes through the external trusted communication channel can be observed by the trust control entity.

According to a further embodiment of the invention, the method comprises a step of inspecting a data traffic that passes through the external trusted communication channel by the trust control entity for compliance with predefined rules. In other words, the control entity inspects the data traffic passing through the external trusted communication channel. The trust control entity verifies that the traffic complies with the predefined rules. If the trust control entity detects a violation of the predefined rules by the traffic, the trust control entity sends a disconnect signal to the firewall and/or at least one of the trust adapters to disconnect the external trusted communication channel. In other words, if the traffic violates the predefined rules, the trust control entity requests that the external trusted communication channel be disconnected by sending the disconnect signal.

According to a further embodiment of the invention, the establishment of the internal trusted communication channel comprises a step of configuration and setup of a communication function in a user plane function of the network according to a UPF-configuration of the network configuration request by the 5G-Core, wherein the communication function connects the internal trust adapter to the internal user equipment. In other words, the network configuration request provided by the internal trust adapter comprises a UPF-configuration describing a communication function to be provided in the user plane function to connect the internal trust adapter to the internal user equipment.

According to a further embodiment of the invention, the internal trusted communication channel comprises a step of configuration of the internal user equipment according to a desired UE-configuration of the network configuration request by the 5G-Core. In other words, the network configuration request comprises a desired UE-configuration. The UE-configuration may comprise settings of the user equipment required to establish the internal trusted communication channel.

For use cases or use situations which may arise during the method and which are not explicitly described here, it may be provided that, in accordance with the method, an error message and/or a request for user feedback is issued and/or a default setting and/or a predetermined initial state is set.

According to a second aspect of the invention, a network is provided. The network is configured to create a trusted communication channel between an internal user equipment within the network and an external trust adapter of an external user equipment outside the network.

A trust control entity of the network is configured to receive a connection request for establishing the trusted communication channel between the internal user equipment and the external trust adapter of an external user equipment. The trust control entity is configured to provide the connection request to an AAA-entity of the network. The AAA-entity of the network is configured to check an admissibility of the connection request. The AAA-entity is configured to send a connection release signal to the trust control entity when the connection request is approved. The trust control entity is configured to send an adapter configuration to an internal trust adapter of the network on receipt of the release signal. The internal trust adapter is configured to send a network configuration request for establishing the internal trusted communication channel between the internal trust adapter and the internal user equipment of the network to a 5G-Core of the network. The 5G-Core is configured to provide the network configuration request to the AAA-entity of the network. The AAA-entity of the network is configured to check an admissibility of the network configuration request and, upon approval of the network configuration request, to send a network configuration release signal to the 5G-Core. The 5G-Core is configured to establish the internal trusted communication channel between the internal trust adapter and the internal user equipment according to the network configuration request upon receiving the network configuration release signal. The internal trust adapter is configured to send a readiness signal to the trust control entity upon establishment of the internal trusted communication channel. The trust control entity is configured to send an initiation message to the external trust adapter and the internal trust adapter to initiate the setup of the external trusted communication channel.

The trust adapters are configured to establish the external trusted communication channel according to the initiation messages. The internal trust adapter is configured to connect the external trusted communication channel to the internal trusted communication channel to establish the trusted communication channel.

Independent of the grammatical term usage, individuals with male, female or other gender identities are included within the term.

The trust adapters, the user equipment, the trust control entity, the AAA-entity, the 5G-Core, the firewall, the radio unit, the distributed unit and the central unit may be modules.

Here and in the following, a module can be understood as a hardware module or as a software module. In particular, a module may also comprise a hardware and a software portion implemented on the hardware.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium. A hardware module may comprise a computing unit.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1': shows a schematic illustration of a provision of a trusted communication channel according to the state of the art;
- FIG 2': shows another schematic illustration of a provision of a trusted communication channel according to the state of the art;
- FIG 3: shows a schematic illustration of a network; and
- FIG 4: shows a schematic illustration of a method.

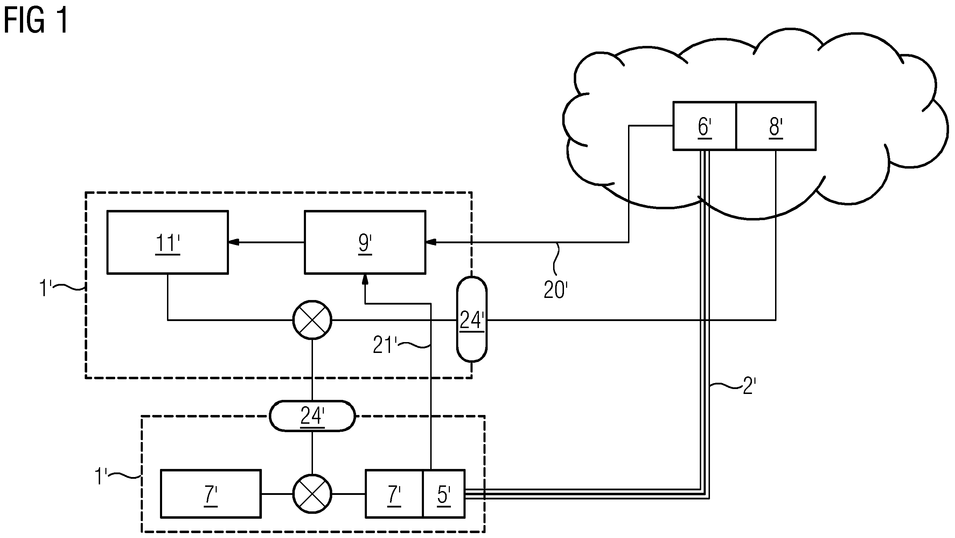

FIG 1' shows a schematic illustration of a provision of a trusted communication channel 2' according to the state of the art.

FIG 1' shows a network 1' configured to provide a trusted communication channel 2' between an external trust adapter 6' and an internal trust adapter 5' according to the state of the art.

The network 1' may be configured to enable a trusted communication between an external user equipment 8' outside the network 1' and an internal user equipment 7' inside the network 1'. The trusted communication channel 2' may provide a trusted communication between the internal user equipment 7' and the external user equipment 8' according to a zero trust approach. In contrast to segmentation-based approaches, it may not be desirable to provide an entry point for the external user equipment 8' that includes the external user equipment 8'. In the segmentation-based approach usually each device in a segmented network 1' is defined as trusted. In zero-trust approaches communication between devices is restricted and guided through trusted communication channels 2'. The trusted communication channels 2' connect endpoints of the trusted communication. To enable a device for trusted communication, a trust adapter hast to be provided for the respective device.

The network 1' of FIG 1' comprises a trust control entity 9' configured to establish a trusted communication channel 2' between the external trust adapter 6' outside the network 1' and the internal trust adapter 5' inside the network 1' according to a connection request 10'. The external trust adapter 6' may be assigned to an external user equipment 8'. The internal trust adapter 5' may be assigned to an internal user equipment 7'. The trust control entity 9' may be configured to provide the connection request 10' to an AAA-entity 11'. The AAA-entity 11' may be configured to prove whether the connection request 10' is valid according to predefined rules. The AAA-entity 11' may be configured to send a connection release signal 12' to the trust control entity 9' if the connection request 10' is valid. The trust control entity 9' may be configured to send initiation messages 20', 21' to the trust adapters to initiate the trusted communication channel 2' between the external trust adapter 6' and the internal trust adapter 5'. The trust control entity 9' may configure a firewall 24' of the network 1' according to a firewall 24' configuration to allow the setup of the trusted communication channel 2'. The internal user equipment 7' may comprise the respective internal trust adapter 5' serving as an endpoint of the trusted communication channel 2'. As there is no centralized trust adapter for internal user equipment 7' within the network 1', it is necessary that each user equipment within the network 1' comprises a respective internal trust adapter 5'.

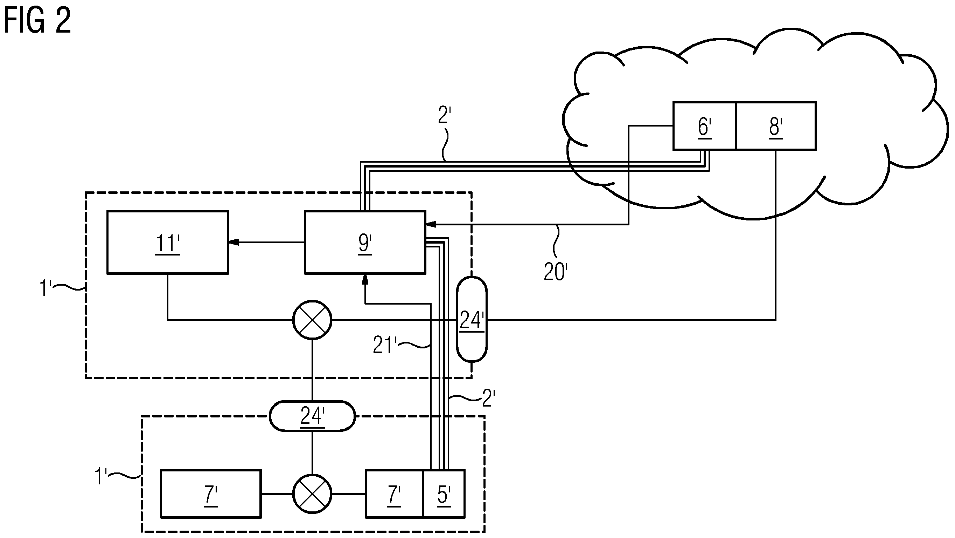

FIG 2' shows another schematic illustration of the network 1' according to the state of the art. In contrast to the network 1' shown in FIG 1', the network 1' shown in FIG 2' may comprise the trusted communication channel 2' going through the control entity. It is therefore possible for the trust control entity 9' to observe traffic passing through the trusted communication channel 2' and to validate that the data traffic is compliant with the predefined rules.

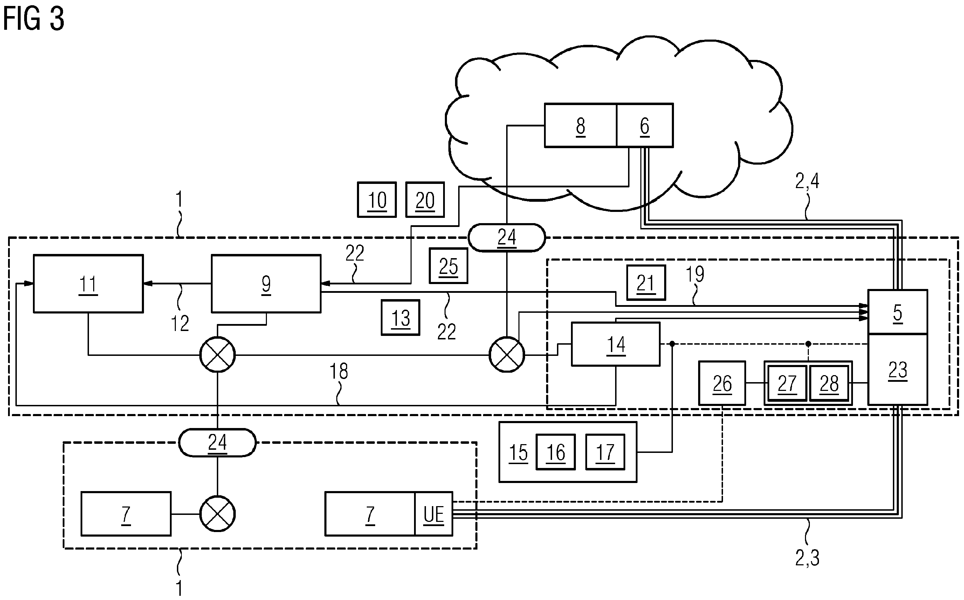

FIG 3 shows a schematic illustration of the network 1.

Unlike the networks 1' shown in FIG 1' and FIG 2', the network 1 shown in FIG 3 may involve a centralized approach with respect to the internal trust adapter 5.

The network 1 may be configured to provide a trusted communication channel 2 between an external user equipment 8 outside the network 1 and an internal user equipment 7 inside the network 1 using a 5G connection. The trust control entity 9 of the network 1 may be configured to receive a connection request 10 to establish the trusted communication channel 2 between an internal user entity and an external user equipment 8. The trust control entity 9 may be configured to receive the connection request 10 from the internal user equipment 7 and/or the external user equipment 8.

The control entity may be configured to transmit the connection request 10 to an AAA-entity 11 of the network 1 in order to prove whether the connection request 10 is valid. In case the connection is valid, the AAA-entity 11 may send a connection release signal 12 to the trust control entity 9 allowing the establishment of the trusted communication channel 2. The trusted communication channel 2 may comprise an internal trusted communication channel 3 and an external trusted communication channel 4. The internal trusted communication channel 3 may be configured to provide a trusted connection of the trusted communication channel 2 inside the network 1. The external trusted communication channel 4 may be configured to provide a trusted connection of the trusted communication channel 2 outside the network 1.

The trust control entity 9 may be configured to send an adapter configuration 13 to the internal trust adapter 5. The adapter configuration 13 may comprise settings for the internal trust adapter 5 to establish the internal trusted communication channel 3 between the internal adapter and the internal user equipment 7.

The internal trust adapter 5 may comprise an interface to a user plane function 23 of the network 1. The internal trust adapter 5 may be configured to set an interface or endpoint for the external trusted communication channel 4 according to the adapter configuration 13. The internal trust adapter 5 may be configured to generate a network configuration request 15 comprising a desired user entity configuration and a desired UPF-configuration 17 necessary to provide the internal trusted communication channel 3 to a 5G-Core 14 of the network 1. The network configuration request 15 may depend on the adapter configuration 13.

It may be necessary that the connection provided by the internal trusted connection channel inside the network 1 complies with the predefined rules in the AAA-entity 11, to provide a connection between the internal trust adapter 5 and the internal user equipment 7. It may be therefore necessary to validate that the internal trusted communication channel 3 to be established by using the network configuration request 15 complies with the predefined rules.

The 5G-Core 14 may be configured to transmit the network configuration request 15 to the AAA-entity 11 in order to validate the network configuration request 15. The validation may relate to the UE-configuration 16 and/or the desired UPF-configuration 17. The AAA-entity 11 may be configured to send a network 1 configuration release signal to the 5G-Core 14 in case the requested network 1 configuration complies with the predefined rules. The 5G-Core 14 may be configured to configure the user plane function 23 and the internal user equipment 7 upon reception of the network 1 configuration release signal to establish the internal trusted communication channel 3. The 5G-Core 14 may establish a communication function in the user plane function 23 according to the UPF-configuration 17. The 5G-Core 14 may be configured to setup a 5G link between the internal user equipment 7 and the user plane function 23 according to the UE-configuration 16. The configuration to be performed by the 5G-Core 14 may involve a Radio Unit 26 of the network 1, configured to transmit and to receive signals via an air interface and to realize lower physical layers of a 3GPP protocol stack in the 5G network 1. The configuration may also involve a Distributed Unit 27 and/or a Central Unit 28 of the network 1 configured to realize, depending on the chosen front haul split option, an upper physical layer and a medium access control layer functions and higher layer 3GPP protocols. The distributed unit 27 and/or the central unit 28 may be controlled by the 5G-Core 14 or an intermediate entity like a RAN Intelligent Controller (RIC) as proposed by O-RAN Alliance. The configuration of the internal user equipment 7 may involve a protocol stack and radio hardware on a device enabling the device to connect to the 5G system and transmit data wirelessly.

The internal trust adapter 5 may be configured to connect to a 5G link upon configuration of the user plane function 23 and the internal user entity device. The internal adapter may be configured to send a readiness signal 19 to the trust control entity 9 upon establishment of the internal trusted communication channel 3. The trust control entity 9 may be configured to configure a firewall 24 of the network 1 according to a firewall 24 configuration to allow an establishment of the external trusted communication channel 4 through the firewall 24. The trust control entity 9 may be configured to send an initiation message 20, 21 to the internal trust adapter 5 and to the external trust adapter 6 to build the external trusted communication channel 4. The trust adapters may be configured to initiate the external trusted communication channel 4 between the internal trust adapter 5 and the external trust adapter 6 according to the initiation messages 20, 21. The external trusted communication channel 4 may be guided through the trust control entity 9 to observe the traffic through the trusted communication channel 2.

The internal trust adapter 5 may connect the internal trusted communication channel 3 to the external trusted communication channel 4 to provide the trusted communication channel 2. Because the external trusted communication channel 4 provides a trusted communication between the external adapter and the internal adapter and because the internal trusted communication channel 3 provides a trusted communication between the internal trust adapter 5 and the internal user equipment 7, a trusted communication between the external trust adapter 6 and the internal user equipment 7 may be provided without a need to provide a respective trust adapter for the internal user equipment 7.

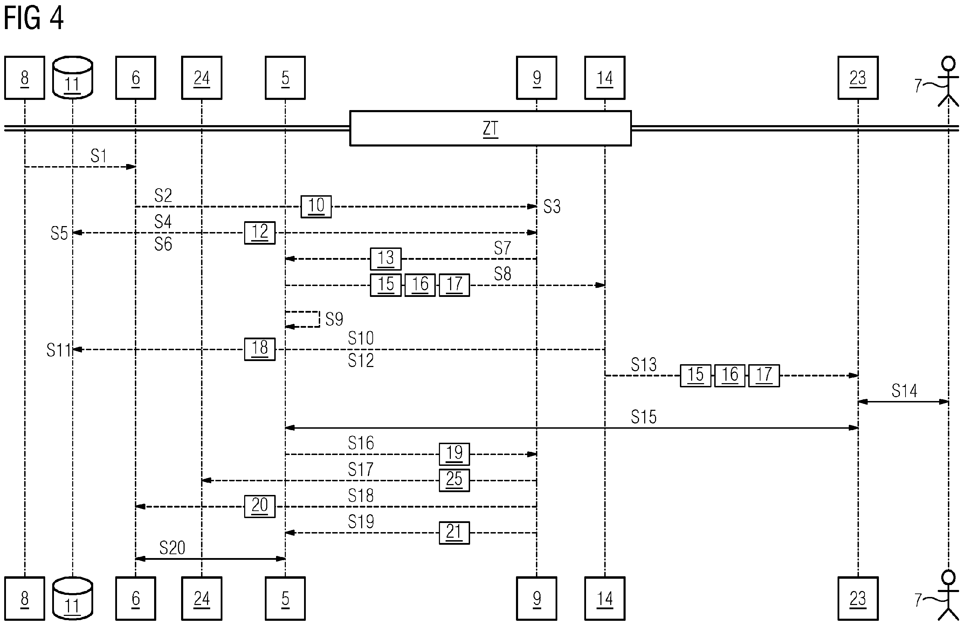

FIG 4 shows a schematic illustration of a method.

FIG 4 shows a schematic illustration of the method and element the following units that may be involved.

The trust control entity 9, also called Zero-trust control entity 9, may be configured as a function or a device, configured to establish trusted communication channels 2.

The external trust adapter 6 may be designed as a Zero-trust adapter or client outside the campus network 1. It may be an end point for the external trusted communication channel 4 of a service, e.g., a channel end point outside the campus network 1, either in an IT network 1 or a cloud.

The internal trust adapter 5 may be designed as a Zero-trust adapter or client inside the campus network 1. It may be an end point for the external communication channel of the service inside the campus network 1. It may be responsible to connect data traffic of corresponding user plane function 23(s) UPF(s) securely to the external communication cannel (uplink) and for forwarding incoming data traffic from remote service end points through the external trusted communication channel 4 to the corresponding user plane function 23(s) UPF(s) and the connected internal user equipment 7 (UEs). This component may be realized as a separate entity - a trusted/secure connection between user plane function 23 and internal trust adapter 5 may be required - or directly as an internal function of a modified/extended user plane function 23.

In addition, also AAA may be done by the internal trust adapter 5. All connected UEs usually authenticate via the 5G system's authentication and access control mechanisms.

Nevertheless, an additional check and validation on service and device level may be done by the internal trust adapter 5 through an appropriate interface to the AAA-entity 11.

The user plane function 23 UPF may be an entity terminating 3GPP user-plane protocols and forwarding data traffic to a data network 1 outside of the 5G system.

The service may be an application that is being accessed by the internal user equipment 7.

The device may be a compute entity that is equipped with a wired or wireless communication module.

The AAA-entity 11 may be an Authentication, Authorization and Accounting entity used to manage access rights for devices and services in the network 1. It may interface with the 5G-Core 14 to set subscriber rights for specific user equipment.

The 5G-Core 14 may be an entity managing a 5G system and providing a (3GPP) control plane. It may consists of multiple (virtualized) functions and may terminate the control plane from user equipment. It may manage the components of the 5G Radio Access Network 1 like the radio unit 26, the distributed unit 27, and the Central unit 28.

The Radio Unit 26 may be configured to transmit and to receive signals via the air interface and to realize the lower physical layers of the 3GPP protocol stack in a 5G system.

The Distributed Unit 27 and/or Central Unit 28 may realize (depending on the chosen front haul split option) the upper physical layer and medium access control layer functions and all higher layer 3GPP protocols. Controlled by the 5G-Core 14 or an intermediate entity (e.g., RIC, RAN-intelligent controller as proposed by O-RAN Alliance).

The internal user equipment 7 may comprise a protocol stack and radio hardware on a device enabling the device to connect to the 5G system and transmit data wirelessly.

The firewall 24 may be an entity providing isolation between different network 1 segments by blocking incoming/outgoing connections and enabling (e.g., rule-based) configuration of allowed connections to and from devices within a network 1 segment.

A different implementation option can establish the trusted communication channel 2 through the trust control entity 9. This would allow for additional traffic inspection possibilities or enhanced security mechanisms compared to a firewall 24-based solution, where the trusted communication channel 2 is forwarded through a firewall 24 only.

As soon as the trusted communication channel 2 should be closed (e.g., AAA decides for invalidation, or the trust control entity 9 detects violations of predefined rules, the trust control entity 9 may trigger the firewall 24 and/or internal trust adapter 5, optionally also the external trust adapter 6 for shutting down the trusted communication channel 2.

The example illustrated in FIG 4 may show a case wherein the setup of the trusted communication channel 2 is initiated by the external user equipment 8. However the setup of the trusted communication channel 2 may also be initiated by the internal user equipment 7.

In a first step S1 of the method for creating the trusted communication channel 2 between the internal user equipment 7 within the network 1 and the external trust adapter 6 of the external user equipment 8 outside the network 1, the external user equipment 8 may trigger the external trust adapter 6 to set up a service for the internal user equipment 7.

In a second step S2 the external trust adapter 6 may request the setup of the service by sending a communication request to the trust control entity 9. The trust control entity 9 may comprise an, interface exposed to devices outside and/or inside the network 1.

In a third step, the trust control entity 9 of the network 1 may receive the connection request 10 for establishing the trusted communication channel 2 between the internal user equipment 7 and the external trust adapter 6 of the external user equipment 8.

In a fourth step S4 the trust control entity 9 of the network 1 may provide the connection request 10 to the AAA-entity 11 of the network 1.

In a fifth step S5, the AAA-entity 11 may check an admissibility of the connection request 10.

In a sixth step S6, the AAA-entity 11 may send the connection release signal 12 to the trust control entity 9 upon approval of the connection request 10.

In a seventh step S7, the trust control entity 9 may send an adapter configuration 13 to an internal trust adapter 5 of the network 1 upon reception of the release signal.

In an eight step S8, the internal trust adapter 5 may send a network configuration request 15 for establishing the internal trusted communication channel 3 between the internal trust adapter 5 and the internal user equipment 7 of the network 1 to a 5G-Core 14 of the network 1.

In a ninth step S9, the internal trust adapter 5 may establish an interface for the external trusted communication channel 4 according to the adapter configuration 13.

In a tenth step S10, the 5G-Core 14 may provide the network configuration request 15 to the AAA-entity 11 of the network 1.

In an eleventh step S11, the AAA-entity 11 may check an admissibility of the network configuration request 15.

In an twelfth step S12, the AAA-entity 11 may send a network configuration release signal 18 to the 5G-Core 14 upon approval of the network configuration request 15.

In a thirteenth step S13, the 5G-Core 14 may set up communication functions in the UPF 23 according to the UPF-configuration 17 of the network configuration request 15.

In a fourteenth step S14, the 5G-Core 14 may configure the internal user equipment 7 according to the UE-configuration 16 of the network configuration request 15. The 5G-Core 14 may link the internal user equipment 7 to the UPF 23.

In a fifteenth step S15, the internal trust adapter 5 may interface the UPF 23 of the network 1 and establish the internal trusted communication channel 3 between the internal trust adapter 5 and the internal user equipment 7 according to the network configuration request 15.

In a sixteenth step S16, the internal trust adapter 5 may send a readiness signal 19 to the trusted control entity 9 upon establishment of the internal trusted communication channel 3.

In a seventeenth step S17, the trusted control entity 9 may send the firewall 24 configuration to the firewall 24 of the network 1 to allow the establishment of the external trusted communication channel 4 through the firewall 24.

In a eighteenth step S18, the trusted control entity 9 may send the initiation message 20, 21 to the external trust adapter 6. The initiation message 20, 21 for the external adapter may comprise settings to establish the external trusted communication channel 4 with the internal trust adapter 5. The initiation message 20, 21 may signal, that the communication request is valid.

In a nineteenth S19 step the trusted control entity 9 may send the
initiation message 20, 21 to the internal trust adapter 5. The initiation message 20, 21 for the internal adapter may comprise settings to establish the external trusted communication channel 4 with the external trust adapter 6.

In a twentieth step S20 the internal trust adapter 5 may connect the external trusted communication channel 4 to the internal trusted communication channel 3 to establish the trusted communication channel 2 via the firewall 24.

In this example, the channel setup is triggered by an external service request to the exposed interface of the trust control entity 9. Our proposed system can also handle service setups requested by users/applications on the user equipment. The Example in Figure 4 also describes how one service end point on one user equipment, connected to one UPF is connected.

Of course, different topologies are supported:
1 service; 1 user equipment; 1 UPF; 1 trust adapter/channel n services; 1 user equipment; 1 UPF; 1 trust adapter/channel n services; n UEs; 1 UPF; 1 trust adapter/channel n x (services; n UE; 1 UPF; 1 trust adapter/channel)

A different implementation option may establish the trusted channels through the trust control entity 9. This would allow for additional traffic inspection possibilities (or enhanced security mechanisms) compared to the example in Figure 4, where the trusted channel is forwarded through a firewall 24 only.

As soon as a trusted channel should be closed (e.g., AAA decides for invalidation, or the trust control entity 9 detects violations of given rules), the trust control entity 9 triggers the Firewall 24 and trust adapter (UPF) components (optionally also the trust adapter (Service) component) for shutting down the trusted communication channel 2.

## Claims

1. Method for creating a trusted communication channel (2) between an internal user equipment (7) within a network (1) and an external trust adapter (6) of an external user equipment (8) outside the network (1), comprising the steps of:
- receiving a connection request (10) for establishing the trusted communication channel (2) between the internal user equipment (7) and the external trust adapter (6) of an external user equipment (8) by a trust control entity (9) of the network (1);
- providing the connection request (10) to an AAA-entity (11) of the network (1) by the trust control entity (9);
- checking an admissibility of the connection request (10) by the AAA-entity (11);
- upon approval of the connection request (10) sending a connection release signal (12) to the trust control entity (9) by the AAA-entity (11);
- upon reception of the release signal, sending an adapter configuration (13) to an internal trust adapter (5) of the network (1) by the trust control entity (9);
- sending a network configuration request (15) for establishing the internal trusted communication channel (3) between the internal trust adapter (5) and the internal user equipment (7) of the network (1) to a 5G-Core (14) of the network (1) by the internal trust adapter (5);
- Providing the network configuration request (15) to the AAA-entity (11) of the network (1) by the 5G-Core (14);
- Checking an admissibility of the network configuration request (15) by the AAA-entity (11);
- upon approval of the network configuration request (15) sending a network configuration release signal (18) to the 5G-Core (14) by the AAA-entity (11);
- upon reception of the network configuration release signal (18), establishing the internal trusted communication channel (3) between the internal trust adapter (5) and the internal user equipment (7) according to the network configuration request (15) by the 5G-Core (14);
- upon establishment of the internal trusted communication channel (3), sending a readiness signal (19) to the trusted control entity (9) by the internal trust adapter (5);
- upon reception of the readiness signal (19) by the trusted control entity (9) sending respective initiation messages (20, 21) to the external trust adapter (6) and the internal trust adapter (5) by the trusted control entity (9) to initiate the external trusted communication channel (4);
- establishing the external trusted communication channel (4) between the internal trust adapter (5) and the external trust adapter (6); and
- connecting the external trusted communication channel (4) to the internal trusted communication channel (3) to establish the trusted communication channel (2) by the internal trust adapter (5).

2. Method according to claim 1 comprising steps of:
- sending a firewall (24) configuration to a firewall (24) of the network (1) by the trust control entity (9), and
- providing a connection for the external trusted communication channel (4) by the firewall (24).

3. Method according to one of the preceding claims comprising a step of:
- establishing the external trusted communication channel (4) through the trust control entity (9) by the trust control entity (9) .

4. Method according to claim 3 comprising steps of:
- inspecting a data traffic through the external trusted communication channel (4) by the trust control entity (9), to comply with predefined rules; and
- upon detection of a violation of the predefined rules by the data traffic, sending a disconnect signal (22) to the firewall (24) and/or at least to one of the trust adapters (5,6) to disconnect the external trusted communication channel (4).

5. Method according to one of the preceding claims, wherein the establishment of the internal trusted communication channel (3) comprises a step of:
- configuration and setup of a communication function in a user plane function (23) of the network (1) according to a UPF-configuration (17) of the network configuration request (15) by the 5G-Core (14), wherein the communication function connects internal trust adapter (5) to the internal user equipment (7).

6. Method according to one of the preceding claims, wherein the establishment of the internal trusted communication channel (3) comprises a step of:
- configuration of the internal user equipment (7) according to a UE-configuration (16) of the network configuration request (15) by the 5G-Core (14).

7. Network (1), configured to create a trusted communication channel (2) between an internal user equipment (7) within the network (1) and an external trust adapter (6) of an external user equipment (8) outside the network (1), wherein
- a trust control entity (9) of the network (1) is configured to receive a connection request (10) for establishing the trusted communication channel (2) between the internal user equipment (7) and the external trust adapter (6) of an external user equipment (8);
- the trust control entity (9) is configured to provide the connection request (10) to an AAA-entity (11) of the network (1) ;
- the AAA-entity (11) is configured to check an admissibility of the connection request (10);
- the AAA-entity (11) is configured to send a connection release signal (12) to the trust control entity (9) upon approval of the connection request (10);
- the trust control entity (9) is configured to send an adapter configuration (13) to an internal trust adapter (5) of the network (1) upon reception of the release signal;
- the internal trust adapter (5) is configured to send a network configuration request (15) for establishing the internal trusted communication channel (3) between the endpoint of the internal trust adapter (5) and the internal user equipment (7) of the network (1) to a 5G-Core (14) of the network (1);
- the 5G-Core (14) is configured to provide the network configuration request (15) to the AAA-entity (11) of the network (1) ;
- the AAA-entity (11) is configured to check an admissibility of the network configuration request (15);
- the AAA-entity (11) is configured to send a network (1) configuration release signal to the 5G-Core (14) upon approval of the network configuration request (15);
- the 5G-Core (14) is configured to establish the internal trusted communication channel (3) between the internal trust adapter (5) and the internal user equipment (7) according to the network configuration request (15) upon reception of the network configuration release signal (16),
- the internal trust adapter (5) is configured to send a readiness signal (19) to the trusted control entity (9) upon establishment of the internal trusted communication channel (3),
- the trust control entity (9) is configured to send respective initiation messages (20, 21) to the external trust adapter (6) and the internal trust adapter (5) by the trusted control entity (9) to initiate the external trusted communication channel (4) upon reception of the readiness signal (19) ;
- the internal trust adapter (5) is configured to establish the external trusted communication channel (4) between the internal trust adapter (5) and the external trust adapter (6); and
- the internal trust adapter (5) is configured to connect the external trusted communication channel (4) to the internal trusted communication channel (3) to establish the trusted communication channel (2).
